# EUROPEAN PATENT APPLICATION

(11) **EP 1 432 224 A1**
(43) Date of publication of application: **23.06.2004**
(21) Application number: 03027897.2
(22) Date of filing: 05.12.2003
(51) Int. Cl.: H04M 19/00

(54) **System and method for optimizing power dissipation in subscriber interface line circuits (SLICs)**

(30) Priority: 20.12.2002 US 326694
(71) Applicant: Alcatel Societe Anonyme, 75008 Paris (FR)
(72) Inventor: Ploumen, Franciscus Maria, Windsor, CA 95492 (US)
(74) Representative: Dreiss, Fuhlendorf, Steimle & Becker

(57) **Abstract**

A system and method for optimizing power dissipation in a plurality of Subscriber Line Interface Circuits (SLICs) is disclosed. In one embodiment, a first voltage source (204) is operable to supply a first voltage (V₁) to a portion of the SLICs and a second voltage source (212) is operable to supply a second voltage (V₂) to the portion of the SLICs. Data relating to subscriber loops served by the SLICs is collected and used to dynamically determine the second voltage.

## Description

### BACKGROUND OF THE INVENTION

### Technical Field of the Invention

The present invention generally relates to telecommunications. More particularly, and not by way of any limitation, the present invention is directed to a system and method for optimizing power dissipation in Subscriber Line Interface Circuits (SLICs).

### Description of Related Art

Subscriber Line Interface Circuits (SLICs)are employed to provide an interface between a low voltage signal path in a telephone central office (CO) or remote terminal (RT) and a high voltage telephone subscriber line. The SLIC provides functions such as off hook detection, ringing signaling generation, and battery feed to the subscriber line. The subscriber line consists of a telephone transmission line, including two conductors referred to as A and B or tip and ring, and the subscriber telephone equipment coupled across the tip and ring conductors. The subscriber line and the subscriber telephone equipment are also referred to as a subscriber loop with the telephone being part of the DC loop when the phone handset is taken "off-hook" or the line is "seized" by the customer premise equipment. The terms "off-hook" and "seized" are common terms used to describe a call state in which loop current is drawn by the customer premise equipment.

The SLIC provides power from the telephone CO or RT to the subscriber line in response to a subscriber off-hook condition. That is, power is delivered to the phone when the receiver is off-hook. When the receiver is on-hook, the phone represents a very high DC resistance. The battery voltage is a DC voltage supplied to the SLIC to power the SLIC, the subscriber line, and the subscriber telephone equipment. The battery voltage has a value generally in the range of -20 to -60 VDC with a typical value of the battery voltage being -48 VDC. The SLIC supplies a DC current to the subscriber line in order to source power to the telephone circuitry such as a digital keypad and voice circuits. Superimposed on the DC current are AC signals of audio frequency by which information is conveyed between the subscriber and the CO. The battery voltage source is usually generated at the CO or RT by an AC to DC power source/battery charger and a source of reserve power such as a battery or a DC generator.

At the terminal equipment, a fixed voltage supply, e.g., a battery or DC generator, provides the battery voltage to multiple SLICs and their associated subscriber loops. The subscriber loop length and therefore DC loop resistance may vary significantly between subscriber loops due to the variation in the distances between the terminal equipment and the different subscribers served. With all SLICs powered from the same battery voltage, the power lost in the SLIC can vary widely, and, in particular, can be much higher for short lines than is required for proper operation of the telephone equipment. This results in undesirably high power consumption and dissipation. Moreover, in a dense environment of SLICs over-heating can reduce reliability of the terminal equipment. Power dissipation is a particularly serious problem in RTs since the average loops tend to be short compared to those served by the CO while the RT is often expected to work with loops as long as those at a CO.

One method presently used to reduce power in SLICs is to use two fixed voltages within terminal equipment with the selection between the two power sources being made at the SLIC based on loop resistance. The use of fixed voltages, however, may result in sub-optimal power dissipation on a system level since dissipation will vary widely between installation sites due to variations in site loop length statistics.

Alternatively, some existing SLICs employ a system where a separate DC converter supplies a reduced battery voltage to the SLIC and associated subscriber loop on a line to line basis. This may reduce the power consumption and dissipation for a group of SLICs on a per-SLIC basis, but increases the cost per SLIC and requires a great amount of board space that may not be available in today's crowded telecommunications network equipment cabinets. Therefore, a need exists for a system and method for optimizing power consumption and dissipation in a group of SLICs. Furthermore, a need exists for such a system and method to be inexpensive and require a minimum amount of board space.

### SUMMARY OF THE INVENTION

Accordingly, the present invention advantageously provides a solution that optimizes power consumption and dissipation in a group of SLICs by supplying a first voltage and a second, dynamically configurable voltage to the group of the SLICs wherein the second voltage is determined based on subscriber loop parametrics. The system and method of the present invention thereby provides a cost-effective dissipation reduction scheme that does not require a large amount of board space.

In one aspect, the present invention is directed to a system for optimizing power dissipation in a plurality of SLICs. A first voltage source is operable to supply a first voltage and a second voltage source is operable to supply a second voltage to the SLICs. Data relating to subscriber loops served by the SLICs is collected and used to dynamically determine the second voltage.

In one embodiment, subscriber loop data comprises loop resistance served by each SLIC within a group as determined by some method of measurement. For example, an indication of loop resistance can be determined by measuring the voltage between tip and ring at the SLIC when the loop current is known. The first voltage source may be supplied by a battery input and the second voltage source may be a power converter. The SLICs may be located in a COT or RT.

In another aspect, the present invention is directed to a method for optimizing power dissipation in a plurality of SLICS. The method includes collecting loop data relating to subscriber loops served by the SLICs, supplying a first voltage to the plurality of SLICs, calculating a second voltage based on dynamically determined power parametrics that are a function of the subscriber loop data, and supplying the second voltage operable to be selected by at least a portion of the plurality of SLICs.

In one embodiment, the operation of calculating a second voltage based on dynamically determined power parametrics includes the step of calculating the power dissipation and/or consumption of individual SLICs within a group as a function of possible values of the second voltage. Additionally, the method may include selecting a value for the second voltage, which minimizes power dissipation and/or consumption of the group of SLICs.

In another aspect, the present invention is directed to a system for optimizing power dissipation in a line card. Subscriber loop data is collected from a plurality of SLICs positioned within the line card. A first voltage source is operable to supply a first voltage to a first portion of the SLICs. A second voltage is calculated based on the subscriber loop data, and a power converter is operable to reduce the first voltage and provide the second voltage supply to at least a portion of the SLICs. The reduced voltage supply can be determined in real time, responding as calls are initiated and terminated. Alternatively, the voltage supply is adjusted to reduced levels periodically based on call history or loop statistics.

### BRIEF DESCRIPTION OF THE DRAWINGS

The accompanying drawings are incorporated into and form a part of the specification to illustrate the preferred embodiments of the present invention. Various advantages and features of the invention will be understood from the following Detailed Description taken in connection with the appended claims and with reference to the attached drawing figures in which:

FIG. 1 depicts an exemplary telecommunications network arrangement having a subscriber loop portion wherein the teachings of the present invention may be practiced;

FIG. 2 depicts a subsystem of terminal equipment having a system for optimizing power dissipation in a group of SLICs in accordance with one embodiment of the present invention;

FIG. 3 depicts a flow chart illustrating a method for optimizing power dissipation in a group of SLICs;

FIG. 4A depicts a graph of power consumption as a function of loop length illustrating a scheme for optimizing power consumption according to the teachings of the present invention;

FIG. 4B depicts a graph of power dissipation as a function of loop length illustrating a scheme for optimizing power dissipation according to the teachings of the present invention; and

FIG. 5 depicts a graph of average power dissipation within a group of SLICs versus reduced battery voltage illustrating a scheme for optimizing power dissipation according to the teachings of the present invention.

### DETAILED DESCRIPTION OF THE DRAWINGS

Preferred embodiments of the invention will now be described with reference to various examples of how the invention can best be made and used. Like reference numerals are used throughout the description and several views of the drawings to indicate like or corresponding parts, wherein the various elements are not necessarily drawn to scale.

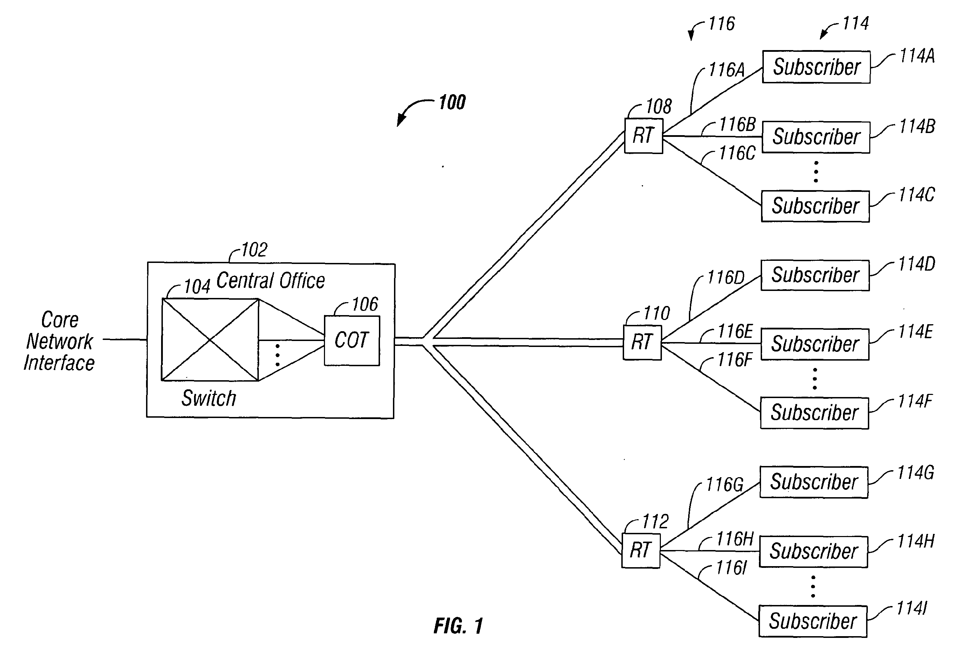

Referring now to the drawings, and more particularly to FIG. 1, there is shown an exemplary telecommunications network arrangement, generally designated reference numeral 10, which incorporates an exemplary preferred embodiment of the present invention. A central office (CO) 102 interfaces with a core network that includes a combination of high-capacity switches and transmission facilities to provide end users or consumers with a set of user-information transfer capabilities for voice and data applications. The central office 102 establishes line-to-line/trunk and trunk-to-line connections, and, in most cases, provides the first line of switching and dial tone to end users. Also, some switching functions are often incorporated at the RT level. A switch positioned at the CO examines incoming data to determine the destination address and initializes transmission paths based on the destination address. Loop carrier nodes, which may also be referred to as access network nodes or terminals (more generically, telecommunications nodes), may be organized in one of several topologies for purposes of the present invention and are comprised of two forms depending on their location in the access loop. When co-located at a CO, the loop carrier node is referred to as a central office terminal (COT). Reference numeral 106 exemplifies a COT coupled to a CO switch 104 that forms part of the CO 102. Other loop carrier nodes external to the CO are referred to as remote terminals (RTs), e.g., RT 108, 110, and 112. Subscribers or customers 114, such as subscriber 114C, receive telephone services via subscriber loops 116, such as subscriber loop 116C, that connect the CO to the demarcation point of the customer's premises. The subscriber loop may be a pair of wires, or additional wires may be present to add additional functionality such as external signaling or duplexing.

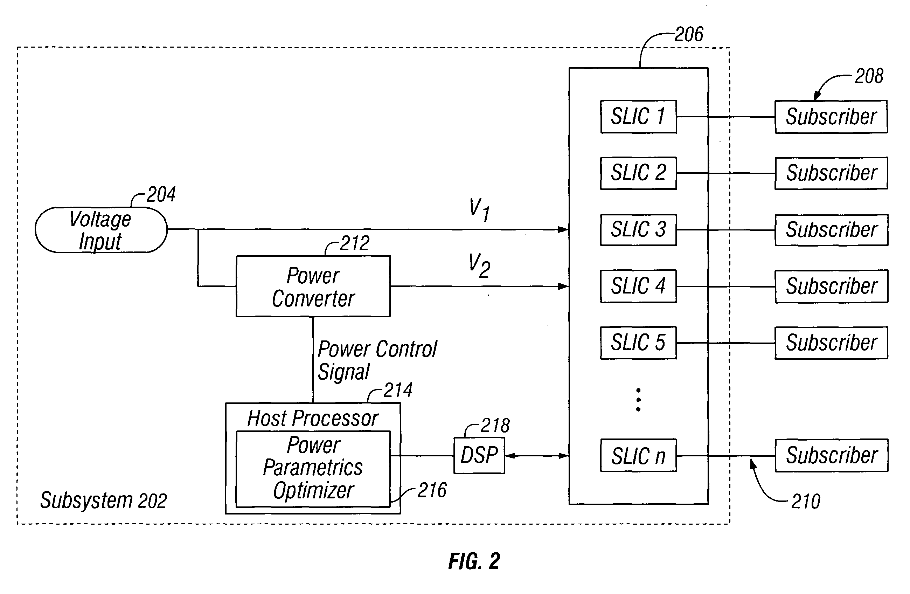

FIG. 2 depicts a subsystem of a COT or RT for optimizing power dissipation in a group of SLICs in accordance with one embodiment of the present invention. Within the subsystem 202, a voltage input source 204 supplies a voltage, V₁, to the group of SLICs 206, labeled SLIC 1 through SLIC n. The voltage input source 204 may be an uninterruptible power supply which converts AC energy from the commercial power grid to the DC battery voltage. The battery voltage, in turn, is delivered to the terminal equipment. Such a power supply includes depletable energy storage devices for providing the battery voltage on a backup basis, when AC energy is not available, for example, during a power outage. The subsystem 202 may take the form of a plug-in electronic Printed Circuit (PC) card that operates ringing, holding and other features associated with one or more SLICs in a telephone equipment rack (not shown). As previously discussed, each SLIC provides power from the subsystem 202 to one of the subscribers 208 via a subscriber loop 210 in response to a low DC resistance a the customer equipment. It should be appreciated that the present invention may be practiced with SLICs employed in any type of telecommunications environment. Moreover, the invention may be practiced with any number of SLICs and with any subscriber loop lengths.

A power converter 212 provides a second source of voltage, V₂, by providing a smooth, regulated reduction in voltage. A host processor 214 having a power parametric optimizer 216 gathers loop data from each SLIC via a digital signal processor (DSP) 218 that interfaces with the group of SLICs 206. The loop data may include subscriber loop resistance measurements, tip/ring voltage, and other data indicative of power consumption and power dissipation. This information is used to optimize the second voltage, V₂, or reduced power voltage to provide the lowest average power dissipation for the group of SLICs 206. Each SLIC is provided with V₁ and V₂ and each SLIC selects the appropriate voltage for its loop length. By having two voltages for the SLICs, wherein one of the voltages (V₂) is provided to be programmably variable, the present invention provides a compact scheme of power optimization based on loop characteristics. Moreover, by optimizing the second voltage for the shorter lines, the system of the present invention sources the short lines, where the loop voltage drop is low, with a reduced voltage that results in a corresponding reduced power dissipation in the SLICs. Accordingly, in a dense environment of SLICs, the power optimization scheme of the present invention optimizes power consumption and dissipation and prevents over-heating that can reduce the reliability of the terminal equipment.

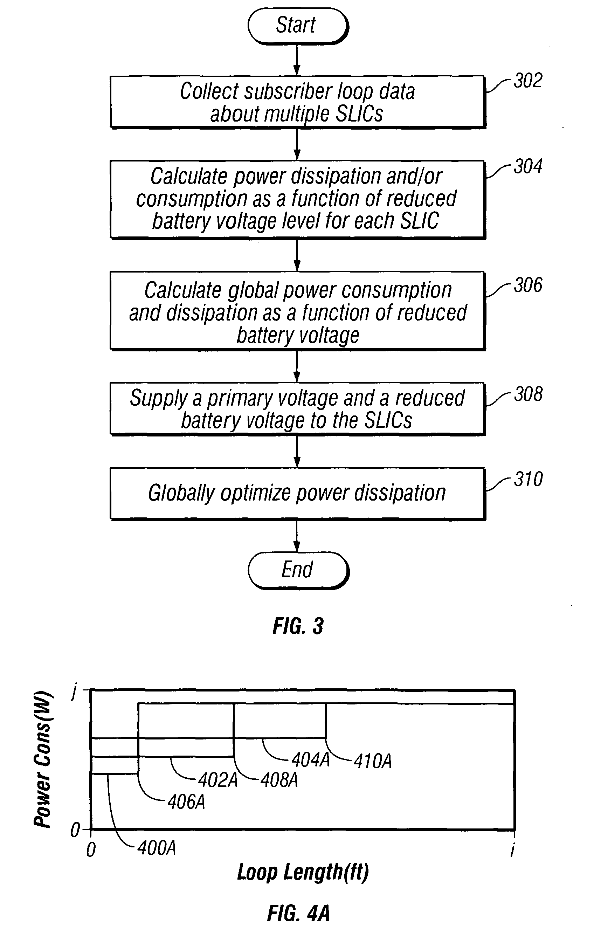

FIG. 3 depicts a flow chart illustrating a method of the present invention for optimizing power dissipation in a group of SLICs. At step 302, subscriber loop data including loop resistance measurements and loss of signal measurements is collected. This data may be gathered from database archives or measured dynamically. At step 304, power dissipation and/or consumption is calculated for each line as a function of the value of reduced battery voltage. At step 306, power consumption and dissipation parametrics are calculated globally (i.e., for a group of SLICs on a line card or any portion thereof) as a function of the variable battery voltage. As will be appreciated by one skilled in the art, many techniques exist for solving a series of equations to find the optimal voltage. For example, calculating the optimal reduced voltage for multiple SLICs may involve solving a series of linear equations simultaneously or by iteration. At step 308, after the reduced battery voltage has been calculated, a primary voltage and a reduced battery voltage are supplied to the SLICs. At step 310, power dissipation/consumption among the SLICs is globally optimized based on the reduced voltage supply. More particularly, the group of SLICs is supplied with the primary voltage and reduced battery voltage which is selected based on the aforementioned power consumption and dissipation parametrics. Each SLIC within the group of SLICs selects the appropriate voltage to globally optimize the power consumption and dissipation of the group of SLICs. Since existing subscribers modify and cancel their services and new subscribers are periodically added, the optimization process of the present invention may be periodically repeated with updated subscriber loop data measurements.

FIG. 4A depicts a graph of power consumption, which increases from 0 to j, as a function of loop length, which increases from 0 to i. As previously discussed, each SLIC may be fed by either a primary or reduced battery voltage. The reduced battery voltage is more efficient, but can only serve a limited loop length. The level of the reduced battery voltage influences the switch over point of the SLICs, i.e., the loop length at which the SLICs may no longer be serviced by the reduced battery voltage. Power behavior lines 400A, 402A, and 404A having switch over points 406A, 408A, and 410A, respectively, illustrate how modifying the reduced battery voltage affects the total power consumption. For example, power behavior line 400A has the smallest reduced battery voltage, but this reduced battery voltage serves only a limited loop length. On the other hand, power behavior line 404A has a high reduced battery voltage which can serve SLICs having much longer loop lengths.

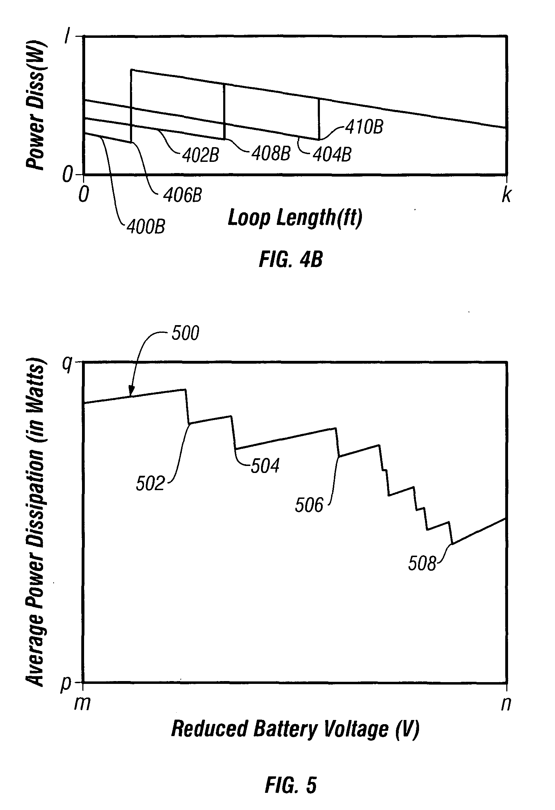

FIG. 4B depicts a graph of power dissipation, which increases from 0 to 1, as a function of loop length, which increases from 0 to k. The power behavior lines 400B, 402B and 404B having switch over points 406B, 408B, and 410B, respectively, correspond to the power behavior lines of FIG. 4A. As illustrated, the level of the reduced power voltage affects the power dissipation. For example, power behavior line 400B is best optimized for short loops, power behavior line 402B is best optimized for medium loops, and power behavior line 404B is best optimized for long loops. FIG. 4A and 4B represent the operations of calculating the optimal reduced battery voltage and switch over point for each SLIC. It should be appreciated that the illustrated power consumption and power dissipation graphs of FIG. 4A and FIG. 4B, respectively, are presented by way of example, and should not be considered as limiting.

FIG. 5 depicts a graph of average power dissipation, which increases from p to q, versus reduced battery voltage, which increases from m to n. Power behavior line 500 characterizes the affect of particular reduced battery voltages and switch-over points on the global dissipation of power for a group of SLICs. For example, switch over points 502, 504, and 506 provide local minimums and switch over point 508 provides a global minimum and represents the lowest average power dissipation. Accordingly, the graph of FIG. 5 illustrates the global optimization of the combined power consumption and dissipation data for multiple SLICs.

Although the invention has been described with reference to certain exemplary embodiments, it is to be understood that the forms of the invention shown and described are to be treated as presently preferred exemplary embodiments only. Various changes, substitutions and modifications can be realized without departing from the spirit and scope of the invention as defined by the appended claims.

## Claims

1. A system for optimizing power dissipation in a plurality of Subscriber Line Interface Circuits (SLICs), comprising:
means for collecting subscriber loop data relating to subscriber loops served by said SLICs;
a first voltage source operable to supply a first voltage to a group of said SLICs; and
a second voltage source operable to supply a second voltage to said group of said SLICs, wherein said second voltage is operable to be dynamically determined as a function of said subscriber loop data.

2. The system as recited in claim 1, wherein said subscriber loop data comprises subscriber loop resistance measurements.

3. The system as recited in claim 1, wherein said second voltage is less than said first voltage.

4. The system as recited in claim 1, wherein said group of said SLICs are associated with a line card.

5. The system as recited in claim 4, wherein said line card is located within terminal equipment.

6. The system as recited in claim 1, wherein said first voltage source is a battery input.

7. The system as recited in claim 1, wherein said second voltage source is a power converter operating responsive to an output from a power optimizer.

8. A method for optimizing power dissipation in a plurality of Subscriber Line Interface Circuits (SLICs), comprising:
collecting subscriber loop data relating to subscriber loops served by said SLICs;
supplying a first voltage to said plurality of SLICs;
calculating a second voltage based on dynamically determined power parametrics as a function of said subscriber loop data; and
supplying said second voltage operable to be selected by at least a portion of said plurality of SLICs.

9. The method as recited in claim 8, wherein collecting subscriber loop data further comprises collecting subscriber loop resistance measurements.

10. The method as recited in claim 8, wherein said second voltage is less than said first voltage.

11. The method as recited in claim 8, wherein calculating a second voltage based on dynamically determined power parametrics further comprises calculating an optimal voltage for each of said plurality of SLICs.

12. The method as recited in claim 11, further comprising selecting one of said optimal voltages as said second voltage.

13. A system for optimizing power dissipation in a line card, comprising:
means for collecting subscriber loop data from a plurality of Subscriber Line Interface Circuits (SLICs) positioned within said line card;
a first voltage source operable to supply a first voltage to a first portion of said SLICs;
means for calculating a second voltage based on said subscriber loop data; and
a power converter operable to reduce said first voltage and provide said second voltage supply to at least a portion of said SLICs.

14. The system as recited in claim 13, wherein said subscriber loop data comprises loop resistance measurements.

15. The system as recited in claim 13, wherein said SLICs are located within terminal equipment.
